# EUROPÄISCHE PATENTSCHRIFT

(11) **EP 1 554 922 B1**
(45) Veröffentlichungstag und Bekanntmachung des Hinweises auf die Patenterteilung: **02.06.2010**
(21) Anmeldenummer: 05000666.7
(22) Anmeldetag: 14.01.2005
(51) Int. Cl.: A01D 78/10

(54) **Kreiselschwader**
Rotary swather
Andaineuse rotative

(30) Priorität: 15.01.2004 DE 102004002384
(43) Veröffentlichungstag der Anmeldung: 20.07.2005
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- EP-A- 1 108 352
- DE-A1- 19 948 245
- DE-B- 1 227 717
- DE-U1- 9 002 630

## Beschreibung

Die Erfindung betrifft einen Kreiselschwader gemäß dem Oberbegriff des unabhängigen Anspruchs 1 (siehe z.B. EP-A-1 108 352).

Kreiselschwader verfügen über wenigstens einen Schwadkreisel, der mittels eines Fahrwerks in seinem Betriebszustand gegenüber dem Boden abgestützt ist. Ein Schwadkreisel besteht im Wesentlichen aus dem umlaufenden, um eine Hochachse angetriebenen, mit gesteuerten Zinkenarmen und Rechzinken bestückten Rechkreisel, dessen Zinkenarme von einer Kurvenbahn über Rollenhebel gesteuert, in einem an der Drehbewegung teilnehmenden Gehäuse gelagert sind, einem Winkelgetriebe als Antriebselement der Rechkreisel, und einer am Maschinengestell abgestützten feststehenden Zentralachse, auf der die an der Rotation teilnehmenden Elemente des Schwadkreisel abgestützt und gelagert sind.

Im allgemeinen sorgen die Räder des Fahrwerks, ausgebildet als Stütz- und Tasträder, unterhalb des Schwadkreisels für die Bodenanpassung der Rechzinken. Angestrebt ist dabei das Ziel, den Abstand zwischen den Zinkenspitzen und dem Boden während des Rechvorgangs möglichst konstant zu halten. Dabei übernimmt die Schwerkraft die Funktion, den Bodenkontakt zwischen den Rädern des Fahrwerks eins Rechkreisel zu sichern.

Des weiteren ist die Technik der kardanischen Kreiselaufhängung in Verbindung mit vorlaufenden oder nachlaufenden Tasträdern bekannt, die ein Verbesserung der Bodenanpassung der Schwadkreisel bewirken soll. Dennoch können auch dabei bei extremen Bodenunebenheiten die Zinkenspitzen in den Boden einstechen und dadurch Futterverschmutzungen herbeiführen.

Die Höheneinstellung der Zinken gegenüber dem Boden kann entweder manuell unterhalb des Schwadkreisels durch Betätigung einzelner Stellelemente erfolgen, mit denen die Höhenlage der Stütz- und Tasträder relativ zu den Zinkenspitzen der Rechzinken veränderbar ist, oder dieses erfolgt durch eine zentrale Verstellung der Höhenlage der Stütz- und Tasträder, beispielsweise mittels einer Gewindespindel oder eines Hydraulikzylinders. Im Falle der zentralen Verstellung wird die Stellspindel bzw. werden die hydraulischen Schlauchleitungen durch die Zentralachse des Schwadgetriebes des Schwadkreisels, die als Hohlachse ausgeführt ist, hindurch geführt.

Die Fahrwerke derartiger Schwadkreisel, die unterhalb des rotierenden Teils eines Schwadkreisels angeordnet sind, sind als drei- oder vierrädrige Fahrwerke ausgebildet. In jedem Fall sind die maximalen Radabstände und die Raddurchmesser von den Begrenzungen des Bauraums unterhalb eines Schwadkreisels abhängig, welches sich insbesondere beschränkend auf den maximalen Raddurchmesser der Stützräder auswirkt. Nachteilig bei dieser Ausführung ist, dass dabei die Gewichtskraft des Schwadkreisels zumindest teilweise als Stützkraft vom Fahrwerk gegenüber dem Boden abgestützt werden muss, wobei der Kraftfluss bauartbedingt über die Zentralachse des Zentralgetriebes und infolge dessen über die Einspannstelle der Zentralachse im Zentralgetriebe der Schwadkreisels verlaufen muss.

Um die Bodenanpassung der Schwadkreisel zu verbessern und um einen ruhigeren Lauf herbeizuführen, werden u.a. Fahrwerke mit Doppelschwingen unterhalb der Schwadkreisel der Stütz- und Tasträder am unteren Ende der Zentralachse angebracht, an deren Enden die Tast- und Stützräder geführt und gelagert sind. Dennoch können bei stark kopierten Bodenwellen die Zinkenspitzen der Schwadkreisel in den Boden eindringen, welches zu Zinkenbrüchen und zu Futterverschmutzungen führen kann.

Um diesen Nachteil zu beseitigen, sind Ausführungen von Schwadkreiseln bekannt, bei denen ein weiteres und zusätzliche Tasträder eingesetzt werden, die dem Fahrwerk eines Rechkreisels außerhalb seines Bauraums vor oder nachgeordnet sind. Diese Bauarten sind aufwendig und daher sind die erfinderischen Überlegungen darauf gerichtet, eine kostengünstigere und einfachere Lösung vorzuschlagen, die zudem die vorgenannten Nachteile vermeidet.

Aufgabe der Erfindung ist es, einen Kreiselschwader vorzuschlagen, bei dem der Schwadkreisel auf einfache und besonders robuste Art laufruhig und sicher gegenüber dem Boden geführt und abgestützt werden kann, wodurch gleichzeitig eine größere Sicherheit gegen zerstörerische Einflüsse, die Schäden an den Schwadkreiseln infolge äußere Krafteinwirkung hervorrufen können, herbeigeführt werden soll.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.
Ein Kreiselschwader nach der Erfindung verzichtet völlig auf ein Fahrwerk unterhalb der Schwadkreisel. Statt dessen werden die Stützräder an einem Portalfahrwerk, welches den Schwadkreisel übergreift, vor und. hinter einem Schwadkreisel positioniert. Gleichzeitig sind die Stützräder als um Hochachsen verschwenkbare Nachlaufräder ausgebildet, so dass diese trotz und wegen ihrer großen Abstände zueinander völlig unabhängig sich auf den jeweiligen Kurvenradius einstellen können. Dabei ist das Portal direkt oberhalb des Zentralgetriebes eines Schwadkreisels mit dem Maschinenrahmen verbunden, so dass äußere Krafteinwirkungen, die auf das Fahrwerk einwirken, infolge dieses Kraftflusses keinen Eingang in das Getriebegehäuse des Zentralgetriebes finden.

In besonders vorteilhafter Weise kann der Schutzbügel eines Schwadkreisels an dem Portalsfahrwerk befestigt werden und ebenso robust ausgeführt sein, so dass dieser als Rammschutz beim Anfahren von Zaunpfählen, Bäumen oder anderen Hindernissen dienen kann ohne dabei selbst zerstört zu werden. Dadurch werden insbesondere die rotierenden Kreiselarme gegen Bruch oder Verformung geschützt aber von noch größerem Wert ist dabei der Schutz gegen zerstörerische Krafteinflüsse auf das Innenleben des Zentralgetriebes eines Schwadkreisels. Gerade Anfahrschäden durch Kollisionen der vorgenannten Art verursachen empfindliche und kostenträchtige Schäden an den Schwadkreiseln, die zumeist nicht nur mit hohen Kosten, sondern auch noch mit erheblichen Ausfallzeiten befrachtet sind.

Auch bei dieser Ausführung nach der Erfindung kann die Ansteuerung aller Laufräder in bezug auf die Höhenverstellung eines Schwadkreisels zentral oder individuell erfolgen. Es liegt im Können und Wissen eines Fachmanns, die Laufräder eines Fahrwerks höhenverstellbar zu gestalten, so dass an dieser Stelle aus Gründen der Vereinfachung darauf verzichtet werden kann, einen derartigen Verstellmechanismus näher zu beschreiben. Hinzuweisen ist jedoch auf den Vorteil, dass bei einer hydraulisch betätigten Höhenverstellung ein Durchführen von Schlauchleitungen durch den beengten Bauraum einer Hohlwelle völlig entfällt. Gleiches gilt auch für eine Spindel oder artverwandte Kraftübertragungselemente. Auch der gute Zugang zu den außenliegenden Laufund Stützrädern ist von erheblichem Vorteil, welcher im Falle von erforderlichen Wartungs- oder Justagearbeiten ein Unfallrisiko und Verletzungen durch anstoßen an feste Körperkanten verhindert.

Ebenfalls von erheblichem Vorteil dieser Bauweise nach der Erfindung ist die freie Wahl der Reifengröße der Lauf- und Stützräder hinsichtlich deren Durchmesser, die nicht mehr vom Bauraum unterhalb des Kreisels eingeschränkt ist. Somit kann insbesondere der Wickelgefahr durch große Reifendurchmesser wirksamer begegnet werden.

Weitere Vorteile ergeben sich in der Optimierung der Tastfunktion durch optimale Position der Tasträder insbesondere als Dreirad-Fahrwerk mit großen Radabständen, wobei die räumliche Neigungsverstellung besonders einfach zentral oder auch individuell ausgeführt sein kann.

Die Zentralwelle kann dabei innerhalb des Bauraums des Kreiselgetriebes enden, da diese nicht mehr als Verbindungsglied zwischen Fahrwerk und Schwadkreisel dienen muss, d.h. sie ist von ihrer Stützfunktion befreit. Dadurch entfällt die Abdichtung des rotierenden Gehäuses, in dem die Zinkenarme gelagert sind, gegenüber der feststehenden Zentralachse. Diese kann dann auch statt aus einer kostenintensiven Hohlwelle als Massivwelle ausgeführt sein, welches gleichzeitig den Vorteil in sich birgt, dass diese eine erhebliche steifere Konstruktion gegen unbeabsichtigte Verformung bei Kollisionsschäden darstellt.

Große Radabstände und eine breitere Spur sorgen dabei für eine erhöhte Laufruhe bei guter Hangstabilität gegen Abdriften durch Hangabtriebskräfte.

Anhand der nachfolgen Figurendarstellungen ist die Erfindung an einem Ausführungsbeispiel näher dargestellt und erläutert:

Es zeigen im einzelnen:
- Fig. 1: zeigt ein Ausführungsbeispiel der Erfindung dargestellt am Beispiel eines gezogenen Zweikreiselschwaders in einer Draufsicht in Arbeitsstellung in Geradeausfahrt
- Fig. 2: zeigt den Kreiselschwader gemäß Fig.1 in einer Draufsicht in einer vereinfachten Darstellung
- Fig. 3: zeigt den Kreiselschwader gemäß Fig.1 bzw. Fig.2 in einer Draufsicht jedoch in einer Kurvenfahrt
- Fig. 4: zeigt den Kreiselschwader gemäß Fig.1 bzw. Fig.2 in einer Draufsicht in einer vereinfachten Darstellung mit integriertem Schutzbügel als Rammschutz für die Schwadkreisel

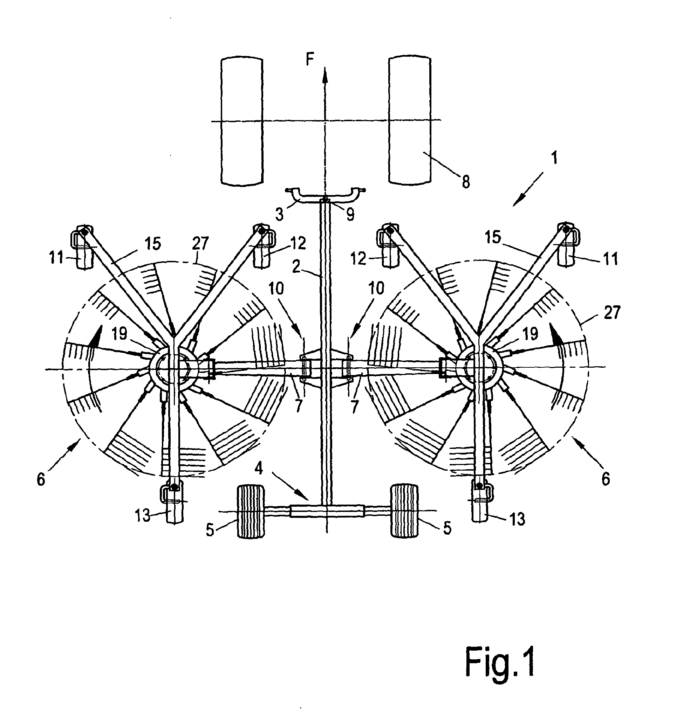

In Fig. 1 ist ein Ausführungsbeispiel der Erfindung dargestellt am Beispiel eines gezogenen Zweikreiselschwaders 1 in einer Draufsicht in Arbeitsstellung in Geradeausfahrt in Fahrtrichtung F. Es handelt sich dabei um kurvenbahngesteuerte, um aufrechte Achsen umlaufend angetriebene Schwadkreisel 6.

Der Kreiselschwader 1 ist als gezogener Mittelschwader in bekannter Bauart mit einer Kupplungsvorrichtung 3, die mittels einem Vertikalgelenk 9 mit dem Maschinengestell 2 des Kreiselschwaders 1 verbunden ist, an einem Zugfahrzeug 8 angehängt. Das Maschinengestell 2 ist endseitig gegenüber dem Boden mittels zwei Stützrädern 5 des Fahrwerks 4 abgestützt. Die Schwadkreisel 6 sind an Auslegern 7 in Klappgelenken 10 an dem Maschinengestell 2 angelenkt. Dabei sind die Stützräder 5 in bekannter Weise lenkbar mit der Kupplungsvorrichtung 3 gekoppelt.

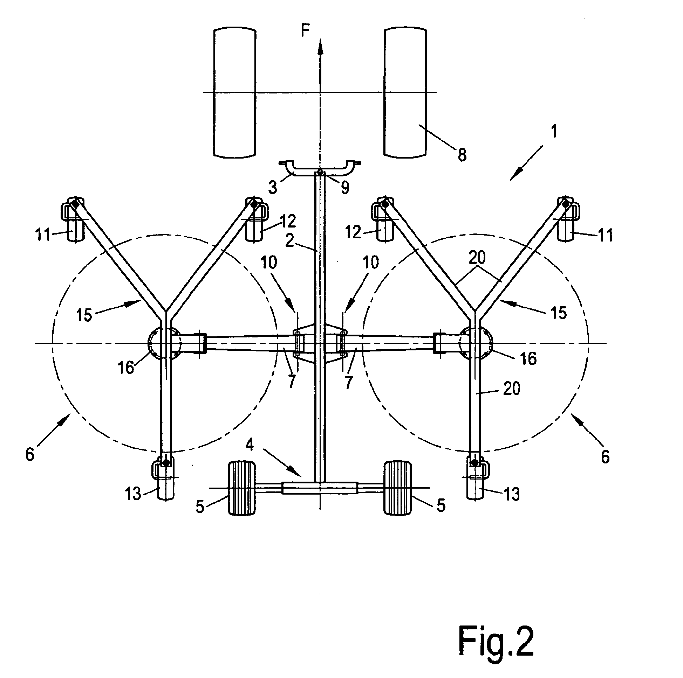

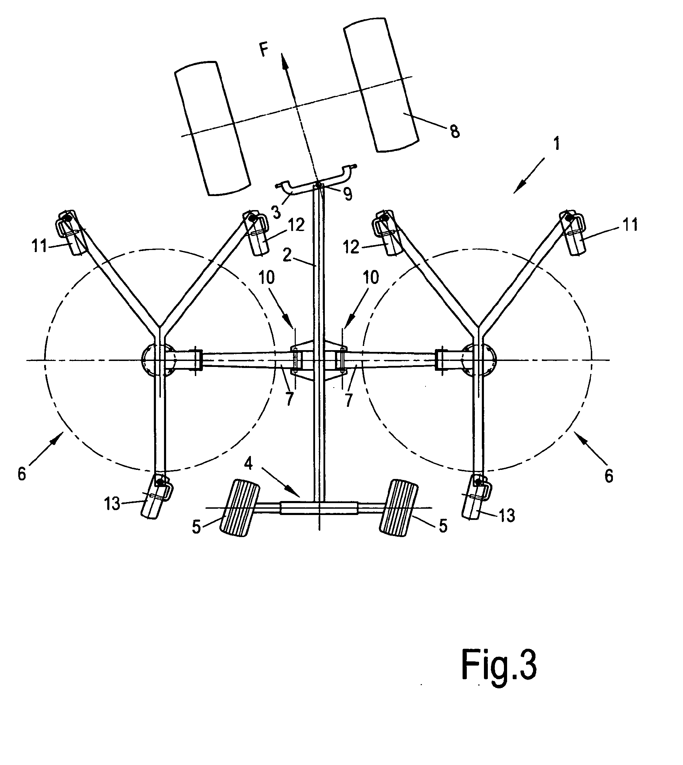

Fig. 2 zeigt den Kreiselschwader gemäß Fig.1 in einer Draufsicht der besseren Übersicht halber in einer vereinfachten Darstellung und Fig. 3 zeigt den Kreiselschwader gemäß Fig.1 bzw. Fig.2 in einer Kurvenfahrt.

Die Schwadkreisel 6 sind von einem Portalfahrwerk 15, welches im vorderen Bereich Y-förmig gespreizt ist, überbrückt. An den äußeren freien Enden des Portalfahrwerks 15 befinden sich die Lauf- und Stützräder 11,12,13, die als Nachlaufräder ausgebildet sind. Somit befinden sich alle Lauf- und Stützräder 11,12,13 eines Schwadkreisels 6 völlig außerhalb des Bauraums des rotierenden Rechkreisels 27 eines Schwadkreisels 6.

Das Portalfahrwerk 15 ist vorteilhafterweise als Schweißkonstruktion, bestehend aus Hohlprofilen 20, ausgebildet. Unterhalb des Portalfahrwerks 15 ist der Schwadkreisel 6 mittels einer Flanschverbindung 16 an dem Portalfahrwerk 15 angeschlossen bzw. abgehängt. Die Flanschverbindung 16 kann beispielweise aus einem an dem Portalfahrwerk 15 angeschweißten Lochflansch bestehen, an dem das Gegenstück, beispielsweise der Lochflansch des Getriebegehäuses des Winkelgetriebes, welches Bestandteil des Zentralgetriebes 19 ist, angeschraubt werden kann.

In einer weiteren vorteilhaften Ausgestaltung der Erfindung ist es auch möglich, die Tragkonstruktion in Leichtbauweise aus Leichtmetall, z.B. aus einer Aluminiumlegierung, zu gestalten.

In einer besonders vorteilhaften Ausgestaltung ist das Portalfahrwerk 15 bei Einkreiselschwadern direkt mit dem Maschinengestell 2 verbunden, oder bei Mehrkreiselschwadern indirekt durch den Ausleger 7 verbunden, dann aber direkt mit diesem mittels der Gelenkverbindung 17. Diese Verbindung kann beispielsweise durch einen seitlichen Halsansatz 18, der einen Teil der Schweißkonstruktion des Portalfahrwerks darstellt, ausgebildet sein.

Dieser Halsansatz 18 kann dann beispielsweise von der Gelenkgabel 21 der Gelenkverbindung 17 übergriffen sein, so dass der Ausleger 7 mit seinem äußeren freien Ende eine Gelenkverbindung 17 mit einer etwa in Fahrtrichtung F verlaufenden Gelenkachse 22 mit dem Schwadkreisel 6 eingeht.

Der besondere Vorteil dieser Ausgestaltung der Verbindung zwischen Portalfahrwerk 15 und Maschinengestell 2 bzw. Ausleger 7 liegt darin, dass der gesamte Schwadkreisel 6 unabhängig von seinem Fahrwerk, gebildet aus Portalfahrwerk 15 mit seinen Lauf- und Stützrädern 11,12,13 ohne dass die Verbindung zwischen dem Portalfahrwerk 15 und dem Maschinengestell 2 bzw. Ausleger 7 gelöst werden muss, im Falle einer Reparatur ausgetauscht werden kann. Dadurch sind Ausfallzeiten durch Reparaturen an Schwadkreiseln auf ein Minimum beschränkt.

Fig. 3 zeigt den Kreiselschwader gemäß Fig.1 bzw. Fig.2 in einer Draufsicht jedoch in einer Kurvenfahrt. Dadurch, dass die Lauf- und Stützräder 11,12,13 gleichzeitig als Nachlaufräder ausgestaltet sind, können sich diese ohne zu schurren auf den momentanen Kurvenradius einstellen, so dass dadurch unnötige Querkräfte, welche auf das Maschinengestell 2 einwirken würden, vermieden werden. Von besonderem Vorteil ist dabei auch, dass das Fahrwerk mit seinen Lauf- und Stützrädern 15 nach der Erfindung, in keiner Betriebssituation in der Lage ist, Quer- oder Längskräfte auf die Zentralachse des Schwadkreisels 6 auszuüben, so dass das Zentralgetriebe von diesen Kräften, die beispielsweise von Stützrädern, die unterhalb eines Rechkreisels angeordnet sind, und die von diesen ausgehen, frei gehalten wird.

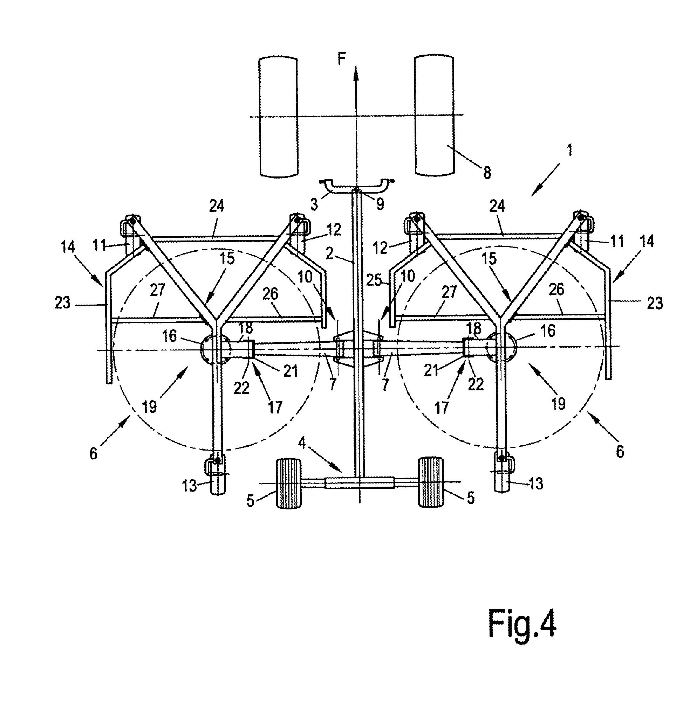

Fig. 4 zeigt den Kreiselschwader gemäß Fig.1 bzw. Fig.2 in einer Draufsicht in einer vereinfachten Darstellung mit einem integrierten Schutzbügel 14 als Rammschutz zum Schutz vor Anfahrschäden an den Schwadkreiseln. Die konstruktive Ausgestaltung der Erfindung ermöglicht es, den Schutzbügel, der in seiner Funktion primär als Anfahrschutz und Abstandshalter zum Schutz von Personen gegen unbeabsichtigte Berührung mit den rotierenden Elementen der Schwadkreisel insbesondere während der Fahrbewegung vorgesehen ist, nunmehr gleichzeitig als Rammschutz zum Schutz der Schwadkreisel auszubilden. Dabei ist der Schutzbügel 14 vorzugsweise direkt mit dem Portalfahrwerk 15 verbunden, welches eben eine besonders robuste Bauweise ermöglicht. In einer besonders vorteilhaften Ausgestaltung ist dieser energieabsorbierend, d.h. steif aber verformbar so ausgestaltet, dass es durch Schraubverbindungen möglich ist, nach einer erfolgten Kollision beispielsweise mit einem Baumstamm einen verformten Schutzbügel durch einen neuen auszutauschen. Vorteilhafterweise kann ein Schutzbügel 14 aus mehreren Schutzbügelelementen 23,24,25,26 zusammengesetzt sein, so dass im Kollisionsfall nur einzelne verformte Elemente ausgetauscht werden können.

Die in dem Ausführungsbeispiel dargelegte Ausführung eines Portalfahrwerks 15 zur Führung und Abstützung eines Schwadkreisels am Boden lässt sich ohne weiteres auch auf Seitenschwader und Einkreiselschwader übertragen. Es liegt im Können und Wissen eines auf diesem Sektor tätigen Fachmanns die Lehre der Erfindung auch auf diese Gattungen von Kreiselschwadern anzuwenden, so dass deren Anwendung auf diese keiner weiteren Erläuterung bedarf.

### Bezugszeichenliste

- 1: Kreiselschwader
- 2: Maschinengestell
- 3: Kupplungsvorrichtung
- 4: Fahrwerk
- 5: Stützrad
- 6: Schwadkreisel
- 7: Ausleger
- 8: Zugfahrzeug
- 9: Vertikalgelenk
- 10: Klappgelenk
- 11: Lauf- und Stützrad
- 12: Lauf- und Stützrad
- 13: Lauf- und Stützrad
- 14: Schutzbügel
- 15: Portalfahrwerk
- 16: Flanschverbindung
- 17: Gelenkverbindung
- 18: Halsansatz
- 19: Zentralgetriebe
- 20: Hohlprofil
- 21: Gelenkgabel
- 22: Gelenkachse
- 23: Schutzbügelelement
- 24: Schutzbügelelement
- 25: Schutzbügelelement
- 26: Schutzbügelelement
- 27: Rechkreisel
- F: Fahrtrichtung

## Patentansprüche

1. Kreiselschwader (1) zum Zusammenrechen von am Boden liegendem Erntegut mit wenigstens einem um eine aufwärts gerichtete Zentralachse eines Zentralgetriebes (19) mit von einer Kurvenbahn gesteuerten umlaufend antreibbaren mit Rechzinken bestückten Schwadkreisel (6), der am Boden durch Laufräder abstützbar ist, **dadurch gekennzeichnet, dass** der wenigstens eine Schwadkreisel (6) von einem Portalfahrwerk (15) übergreifend überbrückt ist, und mit wenigstens drei Stütz- und Laufrädern (11,12,13), die außerhalb des Bauraums des rotierenden Rechkreisels (27) des Schwadkreisel (6) positioniert sind, gegenüber dem Boden abstützbar ist.

2. Kreiselschwader (1) nach Anspruch 1 **dadurch gekennzeichnet, dass** der Schwadkreisel (6) unterhalb des Portalfahrwerks (15) an diesem befestigt ist.

3. Kreiselschwader (1) nach Anspruch 2, **dadurch gekennzeichnet, dass** der Befestigungspunkt zwischen Schwadkreisel (6) und Portalfahrwerk (15) als lösbare Flanschverbindung (16) ausgebildet ist.

4. Kreiselschwader (1) nach Anspruch 1 **dadurch gekennzeichnet, dass** die Abstützung eines Schwadkreisel (6) gegenüber dem Boden durch die Lauf- und Stützräder (11,12,13) des Portalfahrwerks (15) so gestaltet ist, dass diese oberhalb des Zentralgetriebes (19) des Schwadkreisels (6) erfolgt.

5. Kreiselschwader (1) nach Anspruch 1 **dadurch gekennzeichnet, dass** die Anbindung des Portalfahrwerks (15) an das Maschinengestell (2) eines Kreiselschwaders unabhängig von Schwadkreisel ausgebildet ist.

6. Kreiselschwader (1) nach Anspruch 5, **dadurch gekennzeichnet, dass** das Portalfahrwerk (15) mittels einer Gelenkverbindung (17) direkt mit einem Ausleger (7) verbunden ist.

7. Kreiselschwader (1) nach Anspruch 1 in Verbindung mit einem oder mehreren der vorhergehenden Ansprüche, **dadurch gekennzeichnet, dass** die Lauf- und Stützräder (11,12,13) als Nachlaufräder ausgebildet sind.

8. Kreiselschwader (1) nach Anspruch 1 in Verbindung mit einem oder mehreren der vorhergehenden Ansprüche, **dadurch gekennzeichnet, dass** die Lauf- und Stützräder (11,12,13) funktional mit einer Höhenverstellung zur Veränderung des Abstands der Rechzinken gegenüber dem Boden in Wirkverbindung stehen.

9. Kreiselschwader (1) nach Anspruch 1 in Verbindung mit einem oder mehreren der vorhergehenden Ansprüche, **dadurch gekennzeichnet, dass** der Schutzbügel (14) direkt an dem Portalfahrwerk (15) abgestützt ist.

10. Kreiselschwader (1) nach Anspruch 9, **dadurch gekennzeichnet, dass** der Schutzbügel (14) aus wenigstens zwei Schutzbügelelementen (23,24,25,26) besteht, wobei wenigstens eines der Schutzbügelelemente (23,24,25,26) mit dem Portalfahrwerk (15) lösbar verbunden ist.

11. Kreiselschwader (1) nach Anspruch 1 in Verbindung mit einem oder mehreren der vorhergehenden Ansprüche, **dadurch gekennzeichnet, dass** die Tragkonstruktion des Portalfahrwerks (15) aus Hohlprofilen (20) besteht.

12. Kreiselschwader (1) nach Anspruch 9, **dadurch gekennzeichnet, dass** die Hohlprofile (20) der Stahlkonstruktion in Leichtbauweise aus einer Aluminiumlegierung bestehen.

## Claims

1. A rotary swather (1) for raking together crop material which is lying on the ground, comprising at least one swathing rotor (6) which is equipped with raking tines and which is drivable in rotation controlled by a cam track about an upwardly directly central axis of a central transmission (19) and which can be supported on the ground by land wheels, **characterised in that** the at least one swathing rotor (6) is bridged over by a portal chassis (15) engaging thereover and can be supported with respect to the ground with at least three support and land wheels (11, 12, 13) positioned outside the structural space of the rotating raking rotor (27) of the swathing rotor (6).

2. A rotary swather (1) according to claim 1 **characterised in that** the swathing rotor (6) is fixed to the portal chassis (15) below same.

3. A rotary swather (1) according to claim 2 **characterised in that** the fixing point between the swathing rotor (6) and the portal chassis (15) is in the form of a releasable flange connection.

4. A rotary swather (1) according to claim 1 **characterised in that** support for the swathing rotor (6) with respect to the ground by the land and support wheels (1, 12, 13) of the portal chassis (15) is of such a configuration that it occurs above the central transmission (19) of the swathing rotor (6).

5. A rotary swather (1) according to claim 1 **characterised in that** the connection of the portal chassis (15) to the machine frame (2) of a rotary swather is independent of the swathing rotor.

6. A rotary swather (1) according to claim 5 **characterised in that** the portal chassis (15) is connected directly to an arm (7) by means of a hinge connection (17).

7. A rotary swather (1) according to claim 1 in conjunction with one or more of the preceding claims **characterised in that** the land and support wheels (11, 12, 13) are in the form of trailing wheels.

8. A rotary swather (1) according to claim 1 in conjunction with one or more of the preceding claims **characterised in that** the land and support wheels (11, 12, 13) are functionally operatively connected to a height adjustment for altering the spacing of the raking tines with respect to the ground.

9. A rotary swather (1) according to claim 1 in conjunction with one or more of the preceding claims **characterised in that** the guard hoop (14) is supported directly on the portal chassis (15).

10. A rotary swather (1) according to claim 9 **characterised in that** the guard hoop (14) comprises at least two guard hoop elements (23, 24, 25, 26), wherein at least one of the guard hoop elements (23, 24, 25, 26) is releasably connected to the portal chassis (15).

11. A rotary swather (1) according to claim 1 in conjunction with one or more of the preceding claims **characterised in that** the carrier structure of the portal chassis (15) comprises hollow profile members (20).

12. A rotary swather (1) according to claim 9 **characterised in that** the hollow profile members (20) of the steel structure in a lightweight construction comprise an aluminium alloy.

## Revendications

1. Andaineuse rotative (1) pour le regroupement de produit récolté reposant sur le sol, comportant au moins une toupie d'andaineuse (6) qui est entraînée en rotation autour d'un axe central dirigé vers le haut d'une transmission centrale (19), est équipée de dents de râteau commandées par une came et est supportée par rapport au sol par des roues, **caractérisée par le fait que** la toupie d'andaineuse (6), au nombre d'au moins une, est enjambée par un châssis de type portique (15) et est supportée par rapport au sol par au moins trois roues porteuses (11, 12, 13) qui sont disposées à l'extérieur du gabarit du râteau tournant (27) de la toupie d'andaineuse (6).

2. Andaineuse rotative (1) selon la revendication 1, **caractérisée par le fait que** la toupie d'andaineuse (6) est fixée au châssis de type portique (15) sous celui-ci.

3. Andaineuse rotative (1) selon la revendication 2, **caractérisée par le fait que** le point de fixation entre la toupie d'andaineuse (6) et le châssis de type portique (15) est conformé en liaison à bride (16) démontable.

4. Andaineuse rotative (1) selon la revendication 1, **caractérisée par le fait que** le supportage d'une toupie d'andaineuse (6) par rapport au sol par les roues porteuses (11, 12, 13) du châssis de type portique (15) est agencé de manière à ce qu'il ait lieu au-dessus de la transmission centrale (19) de la toupie d'andaineuse (6).

5. Andaineuse rotative (1) selon la revendication 1, **caractérisée par le fait que** la liaison du châssis de type portique (15) au bâti (2) d'une andaineuse rotative est agencée de manière indépendante de la toupie d'andaineuse.

6. Andaineuse rotative (1) selon la revendication 5, **caractérisée par le fait que** le châssis de type portique (15) est lié directement à un bras (7) par le biais d'un joint articulé (17).

7. Andaineuse rotative (1) selon la revendication 1 en liaison avec une ou plusieurs des revendications précédentes, **caractérisée par le fait que** les roues porteuses (11, 12, 13) sont conformées en roues traînées.

8. Andaineuse rotative (1) selon la revendication 1 en liaison avec une ou plusieurs des revendications précédentes, **caractérisée par le fait que** les roues porteuses (11, 12, 13) du point de vue fonctionnel coopèrent avec un dispositif de réglage de hauteur permettant de faire varier la distance des dents de râteau par rapport au sol.

9. Andaineuse rotative (1) selon la revendication 1 en liaison avec une ou plusieurs des revendications précédentes, **caractérisée par le fait que** l'arceau de protection (14) est supporté directement par le châssis de type portique (15).

10. Andaineuse rotative (1) selon la revendication 9, **caractérisée par le fait que** l'arceau de protection (14) comprend au moins deux éléments d'arceau de protection (23, 24, 25, 26), au moins l'un des éléments d'arceau de protection (23, 24, 25, 26) étant lié de manière séparable au châssis de type portique (15).

11. Andaineuse rotative (1) selon la revendication 1 en liaison avec une ou plusieurs des revendications précédentes, **caractérisée par le fait que** la structure porteuse du châssis de type portique (15) est formée de profilés creux (20).

12. Andaineuse rotative (1) selon la revendication 9, **caractérisée par le fait que** les profilés creux (20) de la structure, en construction légère, sont réalisés en alliage d'aluminium.
